# EUROPEAN PATENT APPLICATION

(11) **EP 4 170 545 A1**
(43) Date of publication of application: **26.04.2023**
(21) Application number: 21853078.0
(22) Date of filing: 28.07.2021
(51) Int. Cl.: G06K 9/00, G06F 3/0484, G06F 3/0488, G06F 3/038

(54) **METHOD AND DEVICE FOR ALIGNING HANDWRITING**

(30) Priority: 04.08.2020 KR 20200097593
(71) Applicant: Samsung Electronics Co., Ltd., Gyeonggi-do 16677 (KR)
(72) Inventor: KIM, Dohyeon, Suwon-si, Gyeonggi-do 16677 (KR); SHIN, Jinsu, Suwon-si, Gyeonggi-do 16677 (KR); KWAK, Taewon, Suwon-si, Gyeonggi-do 16677 (KR); LEE, Donghyuk, Suwon-si, Gyeonggi-do 16677 (KR)
(74) Representative: Nederlandsch Octrooibureau
(86) International application number: PCT/KR2021/009787
(87) International publication number: WO 2022/030865

(57) **Abstract**

Various embodiments of the present invention disclose a method and a device comprising: a display module; a memory; and a processor operatively connected with the display module and the memory, wherein the processor is set to: classify handwriting into strokes corresponding to characters and non-character strokes that do not correspond to characters; align the handwritten strokes classified as characters on the basis of a character alignment method; match the non-character strokes with associated character groups; and align the handwritten strokes classified as non-characters on the basis of alignment parameters applied to the matched character group. Various embodiments are possible.

## Description

### [Technical Field]

Various embodiments of the disclosure disclose a method and a device for aligning handwriting.

### [Background Art]

In line with the development of digital technology, various types of electronic devices such as mobile communication terminals, personal digital assistants (PDAs), electronic organizers, smartphones, tablet personal computers (PCs), and wearable devices are widely used. In order to support and improve functions of the electronic device, hardware parts and/or software parts of the electronic device are continuously being improved.

For example, the electronic device provides a function that enables a user to take a necessary memo anytime and anywhere without a notebook or pen. For example, the user may write directly on a display (e.g., a touch screen) using a finger or electronic pen. The electronic device may receive touch tracing (or coordinates) of touching (or coming into contact with) a display as a handwriting input. The user may make a handwriting input using an electronic pen as if writing a note using a pen, thereby conveniently writing a memo while feeling analog sensitivity.

Although the user may conveniently make a note in handwriting using an electronic device, if the handwriting is not good, the handwriting may look unorganized and messy. In order to make the handwriting look neat, guidelines (such as horizontal lines or grid marks) may be provided to help the user write well along the lines when handwriting. Even if the guidelines are provided, the user may handwrite while ignoring the guidelines. Alternatively, after entering a handwriting input, a function for editing the handwriting (e.g., rotate, enlarge, or reduce) may be provided. In this case, it may be inconvenient that the user has to edit the handwriting as desired.

### [Disclosure of Invention]

### [Technical Problem]

Various embodiments may disclose a method and a device for aligning handwriting, which may analyze strokes of handwriting to classify the same into strokes corresponding to characters and non-character strokes that do not correspond to characters, align the strokes of handwriting classified as characters based on a character alignment method, and align the strokes of handwriting classified as non-characters based on alignment parameters of characters associated with the non-characters.

### [Solution to Problem]

An electronic device according to various embodiments of the disclosure may include a display module, a memory, and a processor operatively connected to the display module and the memory, wherein the processor may be configured to classify handwriting into strokes corresponding to characters and non-character strokes that do not correspond to characters, align the strokes of handwriting classified as characters based on a character alignment method, match the non-character strokes to an associated character group, and align the strokes of handwriting classified as non-characters based on an alignment parameter applied to the matched character group.

An operation method of an electronic device according to various embodiments of the disclosure may include classifying handwriting into strokes corresponding to characters and non-character strokes that do not correspond to characters, aligning the strokes of handwriting classified as characters based on a character alignment method, matching the non-character strokes to an associated character group and aligning the strokes of handwriting classified as non-characters based on an alignment parameter applied to the matched character group.

### [Advantageous Effects of Invention]

According to various embodiments, it is possible to automatically align handwriting by analyzing strokes of the handwriting, thereby neatly aligning the handwriting while maintaining analog characteristics of the free handwriting of the user.

According to various embodiments, it is possible to classify handwriting into strokes corresponding to characters and non-character strokes that do not correspond to characters, align the strokes corresponding to characters based on a character alignment method, and align the strokes corresponding to non-characters based on character alignment parameters, thereby providing the aesthetic effect and improving readability of handwriting content.

### [Brief Description of Drawings]

FIG. 1 illustrates a block diagram of an electronic device in a network environment according to various embodiments.
FIG. 2 is a diagram illustrating an example of aligning handwriting in an electronic device according to various embodiments.
FIGS. 3A and 3B are flowcharts illustrating a handwriting alignment method of an electronic device according to various embodiments.
FIG. 4 is a flowchart illustrating a method of determining a handwriting inclination in an electronic device according to various embodiments.
FIGS. 5A and 5B are diagrams illustrating an example of determining a handwriting inclination in an electronic device according to various embodiments.
FIG. 6 is a flowchart illustrating a method of determining an indentation in an electronic device according to various embodiments.
FIG. 7 is a diagram illustrating an example of determining an indentation in an electronic device according to various embodiments.
FIG. 8 is a flowchart illustrating a method of determining a line height in an electronic device according to various embodiments.
FIGS. 9A and 9B are diagrams illustrating an example of adjusting a line height in an electronic device according to various embodiments.
FIG. 10 is a diagram illustrating an example of adjusting line spacing in an electronic device according to various embodiments.
FIG. 11 is a flowchart illustrating a non-character alignment method in an electronic device according to various embodiments.
FIG. 12 is a diagram illustrating an example of aligning non-characters in an electronic device according to various embodiments.
FIGS. 13A to 13C are diagrams illustrating a user interface for aligning handwriting in an electronic device according to various embodiments.
FIGS. 14A and 14B are diagrams illustrating a user interface for configuring an indentation in an electronic device according to various embodiments.
FIGS. 15A to 15C are diagrams illustrating a user interface for aligning handwriting according to a user gesture in an electronic device according to various embodiments.

### [Mode for the Invention]

The electronic device according to certain embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that certain embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

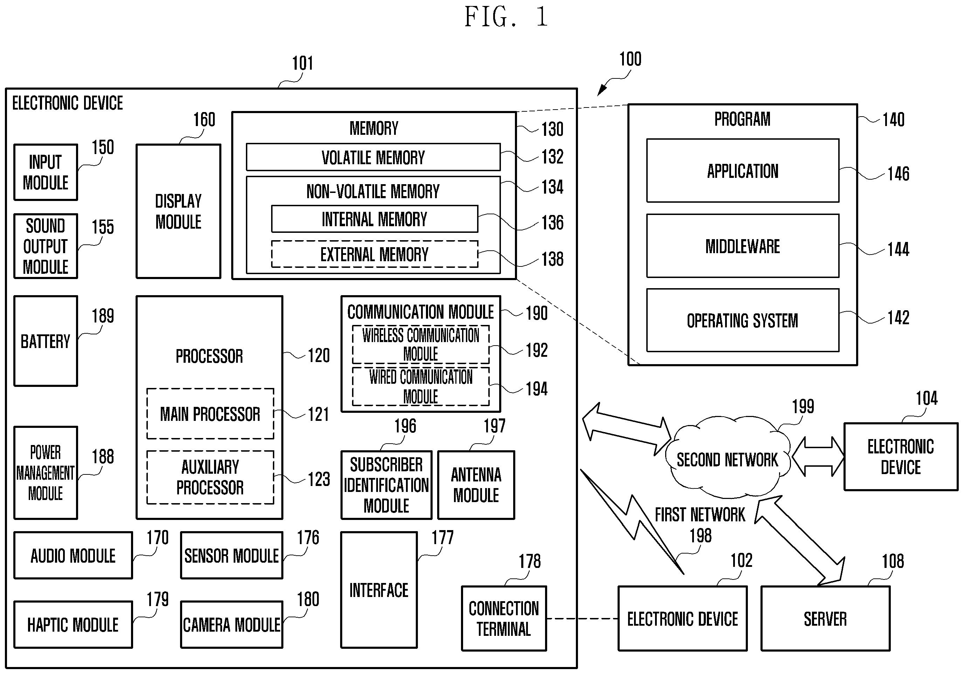

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

Certain embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to certain embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to certain embodiments, each component (e.g., a module or a program) of the above-described components may include a single entity or multiple entities, and some of the multiple entities may be separately disposed in different components. According to certain embodiments, one or more of the above-described components may be omitted, or one or more other components may be added. Alternatively or additionally, a plurality of components (e.g., modules or programs) may be integrated into a single component. In such a case, according to certain embodiments, the integrated component may still perform one or more functions of each of the plurality of components in the same or similar manner as they are performed by a corresponding one of the plurality of components before the integration. According to certain embodiments, operations performed by the module, the program, or another component may be carried out sequentially, in parallel, repeatedly, or heuristically, or one or more of the operations may be executed in a different order or omitted, or one or more other operations may be added.

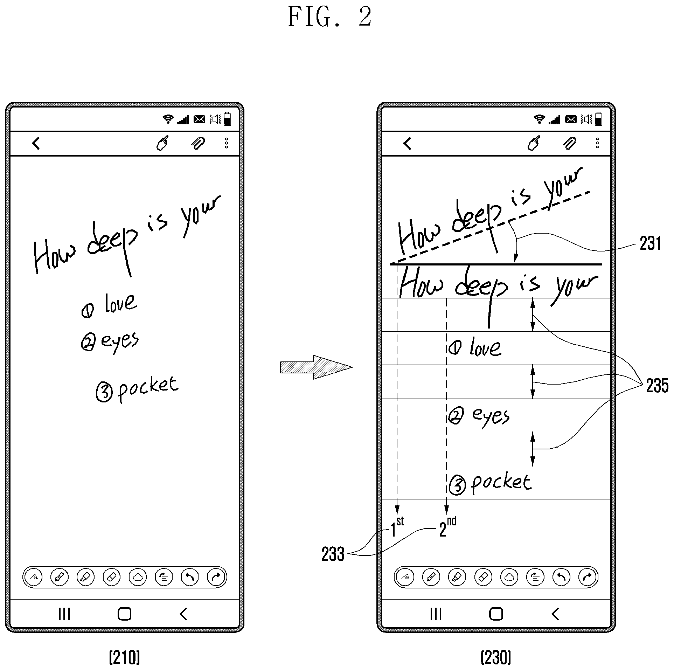

FIG. 2 is a diagram illustrating an example of aligning handwriting in an electronic device according to various embodiments.

Referring to FIG. 2, an electronic device (e.g., the electronic device 101 in FIG. 1) according to various embodiments may receive a handwriting input from a user through a first user interface 210. The user may input handwriting by touching a display (e.g., the display module 160 in FIG. 1) of the electronic device 101 using a user's body (e.g., a finger) or an electronic pen. For example, the electronic device 101 may execute a memo application and receive a touch trace (or coordinates), as handwriting, input to an input area of the executed memo application. Since the handwriting input is not text input through a keypad, it may look a bit chaotic and messy, and readability thereof may be poor.

In order to compensate for these shortcomings, the electronic device 101 may analyze strokes of handwriting to classify the same into strokes corresponding to characters (or letters) and non-character strokes that do not correspond to characters, when classified as characters, align the strokes of handwriting classified as characters based on a character alignment method, and when classified as non-characters, match the non-character strokes to an associated character group and align the strokes of handwriting classified as non-characters based on alignment parameters of the matched character group, thereby aligning the handwriting.

If the strokes constituting the handwriting are able to be classified into characters or non-characters, more accurate and detailed alignment is possible, and even if character/non-character classification is not possible, all strokes may be regarded as parts of characters and processed.

According to various embodiments, the electronic device 101 may align the handwriting as shown in a second user interface 230. Referring to the second user interface 230, the electronic device 101 may correct (or change) the handwriting inclination 231 of strokes of handwriting corresponding to letters, correct the indentation 233 of each line, and correct the line spacing 235, thereby aligning the strokes of handwriting corresponding to letters. Additionally, the electronic device 101 may normalize the height of each line (e.g., the character height or font size). A method of aligning characters or non-characters will be described in detail with reference to the drawings below.

An electronic device (e.g., the electronic device 101 in FIG. 1) according to various embodiments of the disclosure may include a display module (e.g., the display module 160 in FIG. 1), a memory (e.g., the memory 130 in FIG. 1), and a processor (e.g., the processor 120 in FIG. 1) operatively connected to the display module and the memory, wherein the processor may be configured to classify handwriting into strokes corresponding to characters and non-character strokes that do not correspond to characters, align the strokes of handwriting classified as characters based on a character alignment method, match the non-character strokes to an associated character group, and align the strokes of handwriting classified as non-characters based on an alignment parameter applied to the matched character group.

The processor may be configured to determine a handwriting inclination based on feature points of the strokes of handwriting classified as characters, determine an indentation based on a reference position of each line, determine a height of each line based on a center height of the line, and adjust line spacing based on the height of each line, thereby aligning the strokes of handwriting classified as characters.

The processor may be configured to divide the strokes of handwriting classified as characters into partial areas, obtain feature points for each partial area, exclude some feature points based on feature points of neighboring partial areas, and determine a handwriting inclination based on the remaining feature points, thereby aligning inclinations of the strokes of handwriting classified as characters.

The processor may be configured to classify the handwriting classified as characters into lines, identify a start position of each line, cluster the start positions, and determine an indentation of the clustered line, thereby aligning indentation positions of the strokes of handwriting classified as characters.

The processor may be configured to determine, if the identified start positions have a first position and a second position, at least one of the first position, the second position, or an average of the first position and the second position as the indentation position.

The processor may be configured to classify the handwriting classified as characters into lines, divide characters included in each line into partial areas, determine a center height of each line based on an average height of the partial areas, and align line heights of the strokes of handwriting classified as characters based on the center height.

The processor may be configured to exclude center heights that exceed a first threshold value or are less than a second threshold value from heights of all the partial areas included in each line or the average height of the partial areas, and calculate the average height of the partial areas included in each line based on the remaining center heights.

The processor may be configured to calculate an average height of all the lines based on the center height of each line, classify paragraphs based on the average height, calculate an average height of the lines belonging to the paragraph, and align the line heights of the strokes of handwriting classified as characters such that the center height of each line belonging to the paragraph matches to the average height.

The processor may be configured to adjust the line spacing of the strokes of handwriting classified as characters based on a center height area of each line included in the strokes of handwriting classified as characters, or adjust the line spacing of the strokes of handwriting classified as characters based on a center point of each line.

The processor may be configured to cluster the non-character strokes into a group, match the grouped non-character strokes to a character group, and align the strokes of handwriting classified as non-characters based on an alignment parameter of the matched character group.

The processor may be configured to assign non-character strokes recognized as shapes through shape recognition, among the non-character strokes, to a shape group, cluster non-character strokes classified as non-shapes and assign the same to a non-shape group, thereby producing a non-character group, determine a character group to be matched based on a distributions of feature points included in the character group and a determined position of the non-character group, and apply an alignment parameter applied to the determined character group to the non-character group.

The processor may be configured to merge, if a distance between the non-shape group and the shape group is less than or equal to a threshold value, the shape group and the non-shape group into one integrated group and align the integrated group by applying an alignment parameter applied to the character group matched to the integrated group.

The processor may be configured to not align the non-character group if a distance between the character group and the non-character group exceeds a threshold value or if a distance between the shape group and the non-shape group exceeds a threshold value.

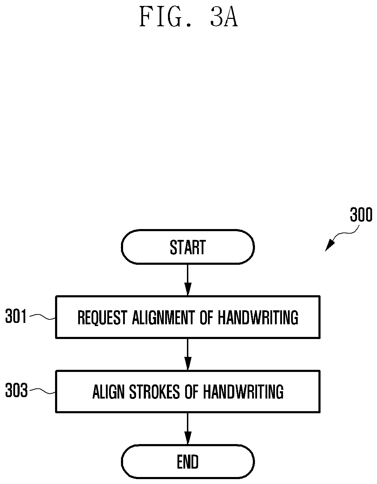

FIG. 3A is a flowchart 300 illustrating a handwriting alignment method of an electronic device according to various embodiments.

Referring to FIG. 3A, in operation 301, a processor (e.g., the processor 120 in FIG. 1) of an electronic device (e.g., the electronic device 101 in FIG. 1) according to various embodiments may receive a request for alignment of handwriting (or handwriting data). The processor 120 may execute an application (e.g., a memo application) for inputting handwriting and receive an input of handwriting to an input area within the executed application. The processor 120 may receive a handwriting input from the user based on touch coordinates (or trace) of touching (or coming into contact) a display (e.g., the display module 160 in FIG. 1). Handwriting may include at least one of a character (or letter) or a non-character. The processor 120 may detect a user input for aligning the handwriting in the executed application. The user input may include at least one of a touch input, a gesture input, and a voice input. When the user input is detected, the processor 120 may interpret that a request for handwriting alignment has been received from the user.

When receiving the handwriting input, the processor 120 may classify the handwriting in units of strokes and store the same in a memory (e.g., the memory 130 in FIG. 1). Handwriting is made up of strokes, and the stroke may indicate a line drawn once or a point in a letter or figure (e.g., a shape). The stroke may include points (e.g., feature points), and the processor 120 may obtain feature points from the strokes and classify the strokes based on the obtained feature points.

In operation 303, the processor 120 may align the classified strokes. The processor 120 may determine a handwriting inclination based on the feature points of the classified strokes, determine an indentation based on a reference position of each line, determine the height of each line based on a center height of the line, adjust line spacing based on the height of each line, thereby aligning the classified strokes. When the classified strokes correspond to non-characters other than characters, the processor 120 may match the non-character strokes to a character group (or character line) and then align the same. The character group (or character line group) may indicate a line including one or more characters. For example, if the classified strokes correspond to non-characters, the processor 120 may cluster and group all strokes classified as non-characters and align the grouped non-character group by matching the same to a character group.

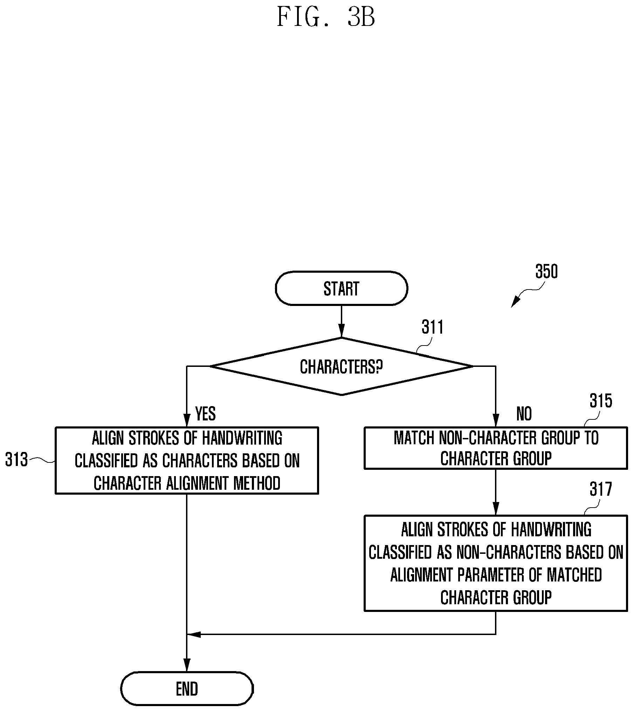

FIG. 3B is a flowchart 350 illustrating a handwriting alignment method of an electronic device according to various embodiments. FIG. 3B may show details of operation 303 in FIG. 3A.

Referring to FIG. 3B, in operation 311, the processor 120 may determine whether or not handwriting corresponds to characters based on the classified strokes. The characters (text or letters) refer to a visual sign system used to write human language, and may include numbers or language characters of each country. Determining whether or not handwriting corresponds to characters may indicate identifying whether or not the handwriting is letters or not, instead of recognizing the country to which the characters of the handwriting correspond. If the strokes of handwriting do not correspond to characters, the processor 120 may classify the same into non-character strokes. The processor 120 may perform operation 313 if the handwriting corresponds to characters, and perform operation 315 if the handwriting does not correspond to characters.

If the handwriting corresponds to characters, in operation 313, the processor 120 may align the strokes of handwriting classified as characters based on a character alignment method. The character alignment method may be to determine a handwriting inclination based on feature points of the strokes of handwriting classified as characters, determine an indentation based on a reference position of each line, determine a height of each line based on the center height of the line, and adjust line spacing based on the height of each line, thereby aligning the strokes of handwriting classified as characters.

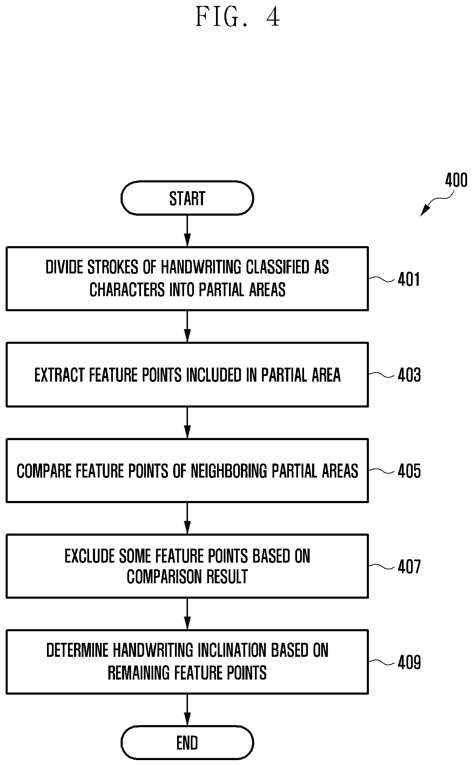

For example, a method of determining the handwriting inclination may include dividing the input strokes of handwriting classified as characters into partial areas, obtaining feature points for each partial area, excluding some feature points based on the feature points of left/right neighboring partial areas, and determining the handwriting inclination based on the remaining feature points. The handwriting inclination determination method will be described in detail with reference to FIG. 4 below.

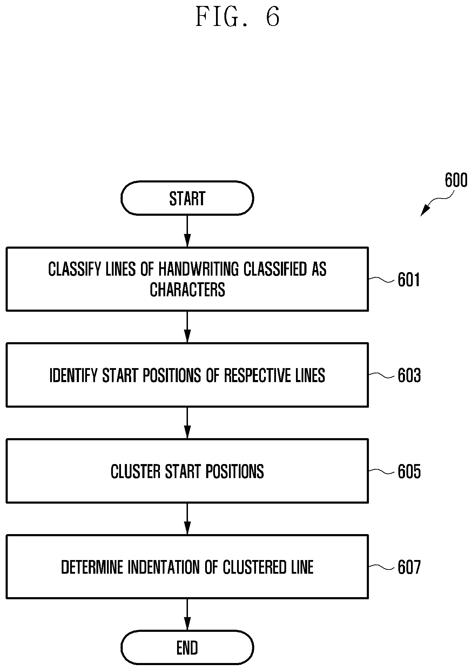

A method of determining the indentation may include grouping the start positions of respective lines by a dynamic clustering method and configuring some (e.g., the left position) of the grouped start positions as an indentation position. For example, in the case where the grouped start positions have a first position (e.g., left) and a second position (e.g., right), at least one of the first position, the second position, or the average of the first position and the second position may be configured as an indentation position of the strokes of handwriting classified as characters. The method of determining the indentation will be described in detail with reference to FIG. 6 below.

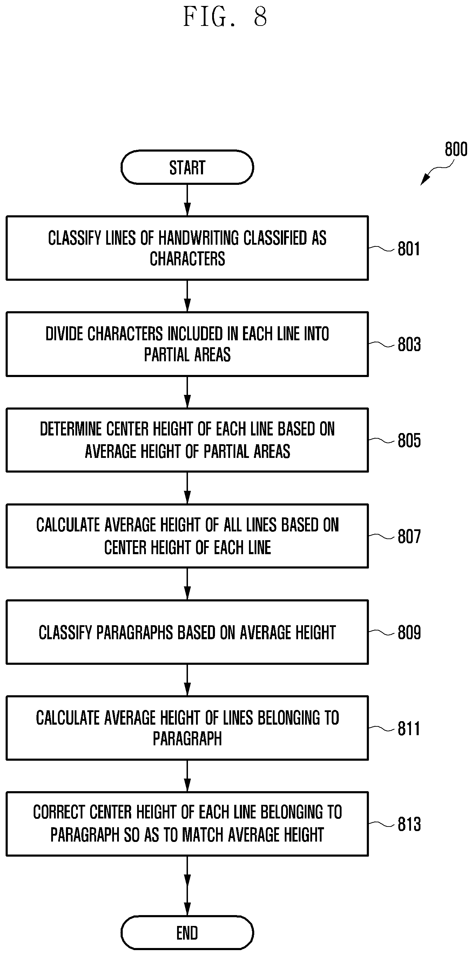

A method of determining the line height may include classifying the lines of handwriting, dividing the characters included in each line into partial areas, determining a center height of each line based on an average height of the partial areas, calculating an average height of all lines based on the center height of each line, classifying paragraphs based on the average height, calculating an average height of lines belonging to the paragraph, and correcting the size of the characters such that the center height of each line belonging to the paragraph matches the average height, thereby normalizing the height of each line of the strokes of handwriting classified as characters. The method of determining the line height will be described in detail with reference to FIG. 8 below.

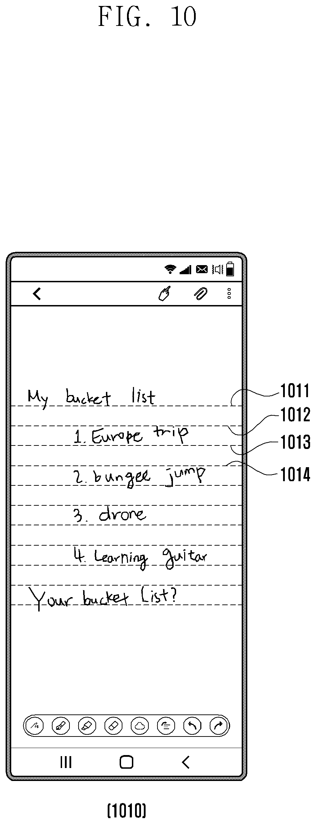

A method of adjusting the line spacing may include adjusting the line spacing of the strokes of handwriting classified as characters based on the center height area of each line, or adjusting the line spacing of the strokes of handwriting classified as characters based on the center point of each line. The method of adjusting the line spacing will be described in detail with reference to FIG. 10 below.

The processor 120 may perform the handwriting inclination determination method, the indentation determination method, the line height determination method, or the line spacing adjustment method in sequence or perform the same in any order. The processor 120 may omit at least one of the handwriting inclination determination method, the indentation determination method, the line height determination method, and the line spacing adjustment method according to input handwriting. The processor 120 may perform or omit at least one of the handwriting inclination determination method, the indentation determination method, the line height determination method, or the line spacing adjustment method according to a user's selection (or configuration) or a configuration of the electronic device 101. The processor 120 may perform all alignments (e.g., handwriting inclination, indentation, line height, and line spacing) at once or may perform one or some alignments.

If the handwriting does not correspond to characters, the processor 120 may match a non-character group to a character group in operation 315. Non-characters (non-text) indicate strokes that are not "letters", and may include an underline written under the characters (text or letters), a shape such as a circle, or a sketch (or drawing). The strokes included in non-characters may also be aligned harmoniously with characters. The character group (or character line group) may indicate a line including one or more characters. According to various embodiments, the processor 120 may cluster and group all strokes classified as non-characters and, and align the grouped non-character group by matching the same to the character group. For example, the processor 120 may assign strokes classified as shapes through shape recognition, among all of the strokes classified as non-characters, to a shape group, and may cluster the remaining strokes by a certain criterion and assign the same to a non-shape group, thereby producing a non-character group. The non-character group may include a group classified as a shape and a group classified as a non-shape. For example, the processor 120 may classify strokes having a specific size or more or strokes having a specific number of points or more into one independent group and may classify the strokes clustering in a certain area through clustering into the same group. The processor 120 may match the non-character group to the character group, based on the distribution of feature points included in the character group and the determined position of the non-character group.

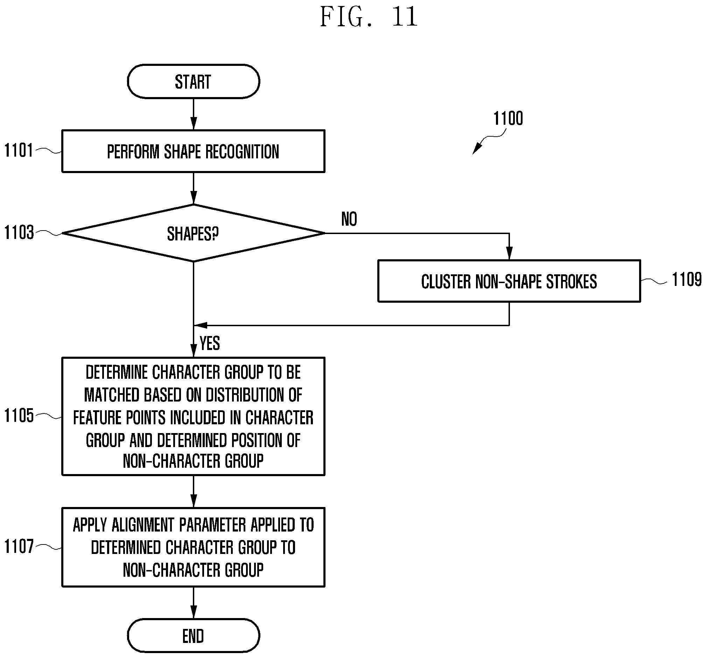

In operation 317, the processor 120 may align the strokes of handwriting classified as non-characters, based on alignment parameters of the matched character group. For example, the processor 120 may apply alignment parameters applied to the character group, which was determined to be matched, to the non-character group, thereby aligning the strokes of handwriting classified as non-characters. According to various embodiments, the processor 120 may analyze the similarity between the shape group and the non-shape group, and determine whether or not to align the non-shape group based on the analysis result. For example, if the distance between the non-shape group and the shape group is less than or equal to a threshold value, the processor 120 may merge the shape group and the non-shape group into one integrated group (or one non-character group) and align the integrated group (or the non-character group obtain by combining the shape group and the non-shape group) by applying alignment parameters applied to the character group, which is matched to the integrated group, thereto. The processor 120 may not align a non-character group (e.g., a shape group, a non-shape group, and an integrated group) in which the distance between the character group and the non-character group exceeds a threshold value or in which the distance between the shape group and the non-shape group exceeds a threshold value (e.g., no similarity). The non-character alignment method will be described in detail with reference to FIG. 11 below.

FIG. 4 is a flowchart 400 illustrating a method of determining a handwriting inclination in an electronic device according to various embodiments. FIG. 4 may be details of operation 313 in FIG. 3B.

Referring to FIG. 4, in operation 401, a processor (e.g., the processor 120 in FIG. 1) of an electronic device (e.g., the electronic device 101 in FIG. 1) according to various embodiments may divide strokes of handwriting classified as characters into partial areas. The partial area is an individual stroke area or a segment including several strokes, and may be obtained by dividing the handwriting in the horizontal direction so as to include a certain area. In order to include multiple strokes in one partial area, the processor 120 may determine the inclusion relationship of the strokes and perform at least one of an initial fully-included vertical merge, a fully-included horizontal merge, and a partially-included merge according to the determination result, thereby dividing the strokes of handwriting corresponding to characters into partial areas.

In operation 403, the processor 120 may extract feature points included in the partial area. The feature points may be extracted from the strokes constituting characters included in the partial area. For example, one or more feature points may be extracted from one partial area. In the case where a partial area includes the number "1", "1" may be divided into three portions so as to extract three feature points from an upper portion, a middle portion, and a lower portion. In the case where a partial area includes the letter "a", "a" may be divided into three portions so as to extract three feature points from an upper portion, a middle portion, and a lower portion. In the case where a partial area includes the letter "j", "j" may be divided into two portions so as to extract two feature points from an upper portion and a lower portion, and then a midpoint may be interpolated. Interpolating the midpoint is optional, so the midpoint may or may not be interpolated depending on the language recognized through character recognition. These examples are only intended to help the understanding of the disclosure, but are not intended to limit the disclosure.

In operation 405, the processor 120 may compare feature points of neighboring partial areas. The neighboring partial areas may indicate two partial areas adjacent to each other. In the case where the user handwrites in the horizontal direction (e.g., from left to right), two neighboring partial areas may indicate partial areas adjacent to each other in the left-right direction (e.g., the horizontal direction). In the case where the user handwrites in the vertical direction (e.g., from top to bottom), two neighboring partial areas may indicate partial areas adjacent to each other in the top-bottom direction (e.g., the vertical direction).

In operation 407, the processor 120 may exclude some feature points, based on the comparison result. Linear regression may be used to detect the inclination of a given cluster from a certain data cluster. Linear regression makes it possible to calculate the inclination of handwriting by detecting the inclination of a point data cluster, based on statistical information. Strokes constituting handwriting express letters, and since these letters have various shapes and positions, the points corresponding to specific positions of the letters may lower the accuracy in detecting the overall inclination of the handwriting. Accordingly, in the disclosure, in order to detect a more accurate inclination of handwriting based on the specificity of the handwriting data, some feature points effective for detection of the inclination of handwriting may be extracted, instead of using all feature points, and used for detection the inclination of handwriting.

According to various embodiments, the processor 120 may exclude a feature point (e.g., a local minimum top point) positioned above the topmost feature point of neighboring partial areas or a feature point (e.g., a local maximum bottom point) positioned below the lowermost feature point thereof.

In operation 409, the processor 120 may determine an inclination of handwriting based on the remaining feature points. The processor 120 may selectively extract all of the remaining feature points or some of the remaining feature points and perform linear regression. According to various embodiments, the processor 120 may perform character recognition to select feature points used for linear regression depending on a language. For example, in the case of a language, such as English, in which respective characters have different heights, the processor 120 may perform linear regression using all feature points, excluding the uppermost or lowermost feature point. In the case of a language, such as Chinese, Korean, or Japanese, in which the characters do not have different heights, the processor 120 may perform linear regression using a feature point (e.g., a center point) positioned at the center, among the feature points extracted from the partial area. These examples are provided to help the understanding of the disclosure, and the disclosure is not limited by the description.

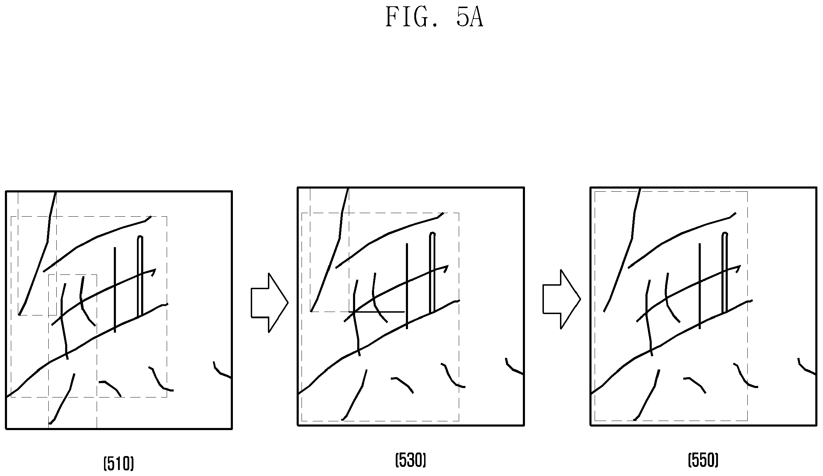

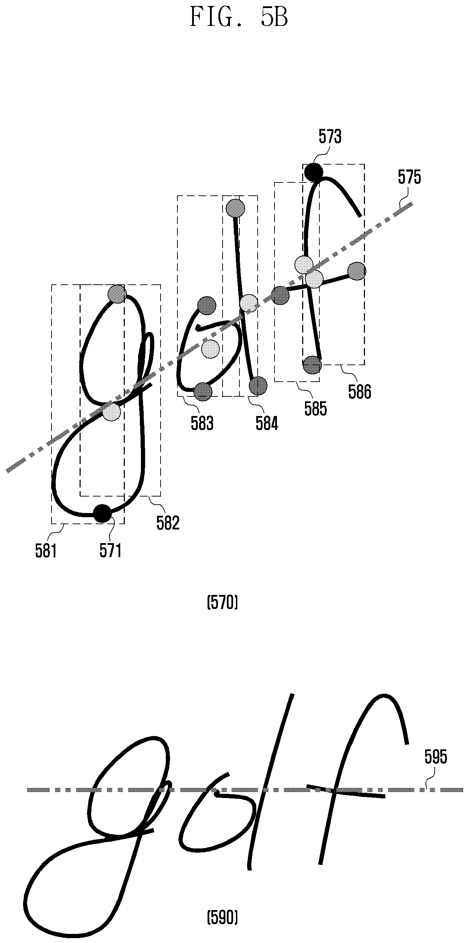

FIGS. 5A and 5B are diagrams illustrating an example of determining a handwriting inclination in an electronic device according to various embodiments.

FIG. 5A is a diagram illustrating an example of configuring partial areas in an electronic device according to various embodiments.

Referring to FIG. 5A, a processor (e.g., the processor 120 in FIG. 1) of an electronic device (e.g., the electronic device 101 in FIG. 1) according to various embodiments may determine the inclusion relationship of strokes in order to include a plurality of strokes in one partial area and configure partial areas according to the determination result. For example, the processor 120 may perform at least one of a vertical stroke merge 510, a horizontally-included stroke merge 530, or a partially-included merge 550 to divide the strokes of handwriting corresponding to characters into partial areas.

FIG. 5B is a diagram illustrating an example of determining a handwriting inclination in an electronic device according to various embodiments.

Referring to FIG. 5B, the processor 120 may perform at least one of a vertical stroke merge 510, a horizontally-included stroke merge 530, or a partially-included merge 550 to divide "golf" into partial areas 581 to 586. The processor 120 may extract feature points included in the partial area, compare feature points of neighboring partial areas, and exclude some feature points, based on the comparison result. In the drawing, feature points are indicated by circular points, and the extracted feature points may be fewer or more than those shown in the drawing. For example, the processor 120 may compare feature points between a first partial area 581 and a second partial area 582, and exclude some feature points 571 corresponding to "g". The processor 120 may compare the feature points between a third partial area 583 and a fourth partial area 584, and may compare the feature points between a fifth partial area 585 and a sixth partial area 586 and exclude some feature points 573 corresponding to "f". The processor 120 may perform linear regression using the remaining feature points, thereby correcting (or determining) a handwriting inclination 575. Reference number 590 shows an example in which the handwriting inclination 595 is corrected for the characters of handwriting.

FIG. 6 is a flowchart 600 illustrating a method of determining an indentation in an electronic device according to various embodiments. FIG. 6 may be details of operation 311 in FIG. 3B.

Referring to FIG. 6, in operation 601, a processor (e.g., the processor 120 in FIG. 1) of an electronic device (e.g., the electronic device 101 in FIG. 1) according to various embodiments may classify lines (or character lines) of handwriting classified as characters. If the user handwrites in multiple lines, alignment may be performed to align a reference position of each line with a certain position. Simply, there may be left alignment, right alignment, center alignment, etc., and in the case where the handwriting has a list, the start positions of a paragraph or line may be aligned differently through indentation.

In a text-based editor, such indentation may be performed simply, but it may be difficult to process handwriting, which is analog data, because the user may write letters at random positions. For example, if the indentation alignment is performed by a fixed indentation, the indentation may be configured at a position different from the user's intention. In consideration of this, the processor 120 may perform indentation alignment using dynamic clustering.

Lines may be divided in the top/bottom or left/right direction, based on the direction in which text is written. For example, in the case of writing text in the horizontal direction, two lines may include a first line written in the horizontal direction and a second line written below or above the first line in the vertical direction of the first line. The processor 120 may determine how many lines are included in handwriting corresponding to characters. If handwriting includes one line, the following operation may not be performed.

In operation 603, the processor 120 may identify start positions of respective lines. The start position may indicate a position at which handwriting starts in each line. Since the user writes in the horizontal direction, the character identified at the leftmost position may be identified as the start position. For example, if handwriting is classified into four lines, the processor 120 may identify a start position (e.g., a first start position) of a first line, a start position (e.g., a second start position) of a second line, a start position (e.g., a third start position) of a third line, or a start position (e.g., a fourth start position) of a fourth line.

In operation 605, the processor 120 may cluster the start positions. A cluster indicates a "group", that is, a data group having similar characteristics of independent variables. Clustering may indicate classifying or grouping objects having similar characteristics into one group, based on characteristics of objects to be clustered. For example, the processor 120 may cluster a plurality of start positions into several representative positions, based on the similarity therebetween. For example, if the distance between the start positions is less than or equal to a configured threshold value (e.g., 1 ms), the processor 120 may determine that they are similar. The threshold value may be configured by a user or may be configured by the electronic device 101. The processor 120 may group the start positions using a dynamic clustering method for dynamically generating the number of clusters, instead of using a fixed number of clusters such as K-means, thereby obtaining one or more start position groups (clusters) depending on the distribution of handwriting. For example, the processor 120 may group the first start position and the third start position into a first cluster, and group the second start position and the fourth start position into a second cluster.

According to various embodiments, the processor 120 may recognize a character (e.g., a language) of the start position to determine whether or not configured information is included in the start position. The configured information may be a criterion for determining an indentation and include, for example, at least one of bullets (e.g., -, ^{∗}, and •), numbers, and symbols. The configured information may be configured by a user or may be configured by the electronic device 101. If configured information is included in the identified start position, the processor 120 may perform grouping, based on the configured information. For example, the processor 120 may group start positions using the same symbol or the same type of symbol into one cluster. The processor 120 may group start positions using numbers into one cluster and group start positions that do not use numbers into another cluster.

In operation 607, the processor 120 may determine an indentation of a clustered line. The processor 120 may determine an indentation position corresponding to one cluster, based on a start position included in one cluster. The processor 120 may perform control such that the lines included in the same cluster are configured to have the same indentation position. For example, in the case of the first cluster including the first start position and the third start position, the processor 120 may determine at least one of the first start position, the third start position, or an intermediate position (e.g., an average value) between the first start position and the third start position to be an indentation position for the first cluster. For the second cluster including the second start position and the fourth start position, the processor 120 may determine at least one of the second start position, the fourth start position, or an intermediate position between the second start position and the fourth start position to be an indentation position for the second cluster. For example, the processor 120 may select the leftmost or rightmost start position, or determine the average of the two start positions as the indentation position. The processor 120 may align the indentation positions of the strokes of handwriting classified as characters, based on the determined indentation position.

According to various embodiments, if handwriting includes one line, the processor 120 may not perform the flowchart 600 in FIG. 6.

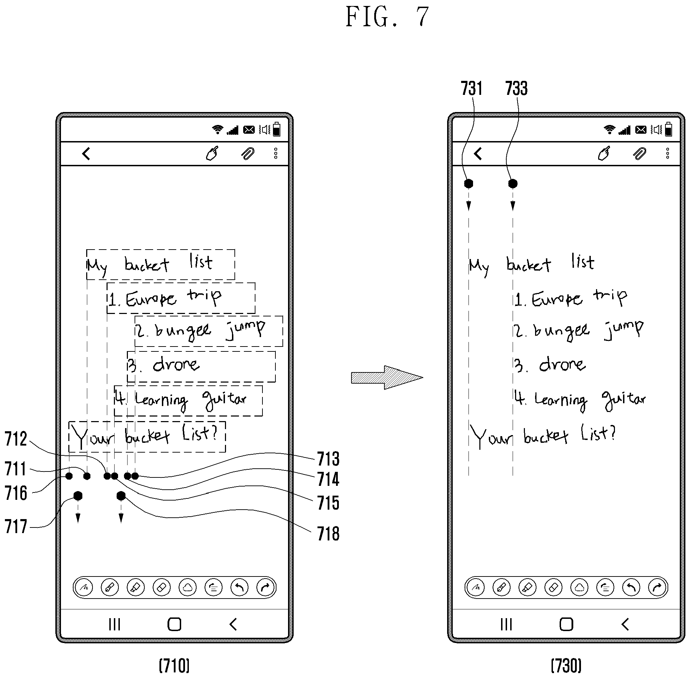

FIG. 7 is a diagram illustrating an example of determining an indentation in an electronic device according to various embodiments.

Referring to FIG. 7, a processor (e.g., the processor 120 in FIG. 1) of an electronic device (e.g., the electronic device 101 in FIG. 1) according to various embodiments, if handwriting is received as show in a first user interface 710, may classify the handwriting classified as characters into lines and identify start positions of the respective lines. For example, the processor 120 may classify handwriting into six lines, identify the start position of a first line as a first start position 711, identify the start position of a second line as a second start position 712, identify the start position of a third line as a third start position 713, identify the start position of a fourth line as a fourth start position 714, identify the start position of a fifth line as a fifth start position 715, and identify the start position of a sixth line as a sixth start position 716.

According to various embodiments, the processor 120 may cluster the first start position 711 to the sixth start position 716 into one or more clusters. The processor 120, based on the similarity between the first start position 711 to the sixth start position 716, may group the first start position 711 and the sixth start position 716 into a first cluster and group the second start position 712 to the fifth start position 715 into a second cluster. The processor 120 may determine the similarity between start positions, based on whether the distances between the plurality of start positions are less than or equal to a configured threshold value or whether configured information (e.g., bullets, numbers, or symbols) is included therein. For example, if a number is included in the start position, such as the second start position 712 to the fifth start position 715, the processor 120 may group them into one cluster.

For the first cluster, the processor 120 may determine at least one of the first start position 711, the sixth start position 716, or an intermediate position 717 between the first start position 711 and the sixth start position 716 as an indentation position for the first cluster. For the second cluster, the processor 120 may determine at least one of the second start position 712, the third start position 713, the fourth start position 714, the fifth start position 715, or an intermediate position 718 of the second start position 712 to the fifth start position 715 as an indentation position for the second cluster.

The processor 120, as shown in a second user interface 730, may adjust the first start position 711 and the sixth start position 716 to the first indentation position 731 and adjust the second start position 712 to the fifth start position 715 to the second indentation position 733, thereby aligning the indentations of the strokes of handwriting classified as characters.

FIG. 8 is a flowchart 800 illustrating a method of determining a line height in an electronic device according to various embodiments. FIG. 8 may be details of operation 311 in FIG. 3B.

Referring to FIG. 8, in operation 801, a processor (e.g., the processor 120 in FIG. 1) of an electronic device (e.g., the electronic device 101 in FIG. 1) according to various embodiments may classify lines (character lines) of handwriting classified as characters. The processor 120 may determine how many lines are included in the handwriting corresponding to characters. If the handwriting includes one line, the following operation may not be performed. Since operation 801 is the same as or similar to operation 601, a detailed description thereof will be omitted. If the processor 120 performs the operation in FIG. 6 and performs the operation in FIG. 8, operation 801 may be omitted.

In operation 803, the processor 120 may divide (or configure or identify) characters included in respective lines into partial areas (or window areas). Since handwriting is different from text, which is digital data, it is difficult to handwrite in a constant fixed size (height), so the size of handwriting may be very variable. It may be very difficult to accurately obtain the height of handwriting because of the position and size of the stroke, a line height may be corrected based on the height of each line. In the disclosure, the center height of each line may be estimated using a line height estimation algorithm, and the average height of characters included in multiple lines may be calculated to correct the size of the character for each line so as to match the average height, thereby normalizing the character size (or height) such that all lines have similar heights.

The processor 120 may divide the characters into partial areas (or window areas) by twice the width of the stroke having the largest width in the characters, and configure the partial areas such that two neighboring partial areas partially overlap each other. For example, the processor 120 may configure a first partial area so as to include one character or a character having a meaning, and configure a second partial area so as to include a part of a character and partially overlap the first partial area (e.g., 1/2 of the first partial area), and configure a third partial area so as to include a part of a character and partially overlap the second partial area.

In operation 805, the processor 120 may determine a center height of each line, based on an average height of the partial areas. The processor 120 may calculate a center value and a center height of each partial area. The processor 120 may calculate an average height of partial areas included in each line, based on the center value and the center height. The processor 120 may calculate the average height, excluding the center heights of some partial areas. For example, the processor 120 may exclude center heights exceeding a first threshold value (e.g., 60%) or less than a second threshold value (e.g., 40%) from the heights of all the partial areas included in each line or the average height of the respective partial areas. For example, the center height exceeding the first threshold value may correspond to a character having a long vertical stroke, such as the letters p, f, and y, or " I " in Korean. The center height less than the second threshold value may correspond to a character having a small height of stroke which itself is small, such as ",", "-". The processor 120 may determine the average height of partial areas having similar heights to be the center height of each line. For example, a similar height may indicate a center height included in the partial area corresponding to a predetermined ratio (e.g., 60% to 140%) of the partial area.

According to various embodiments, the processor 120 may align the line heights of the strokes of handwriting classified as characters, based on the center height of each line. The user may intentionally configure lines that use bullets, lines of titles, or higher level lines thereof to have different sizes. The processor 120 may calculate each average height according to the lines clustered into the same group and determine the center height of each line, based on the calculated average height. For example, the processor 120 may calculate an average height for the lines to which the same indentation is applied and determine the center height of the lines, to which the same indentation is applied, based on the calculated average height.

In operation 807, the processor 120 may calculate an average height of all lines, based on the center height of each line. Users tend to write at a relatively constant size on the same line, but may write at different sizes on different lines. If handwriting on several lines is corrected to have a similar size, it may be changed to a better looking document. The center heights of the respective lines may be different, and the processor 120 may normalize the height of each line by calculating the average height of all lines, based on the center height of each line.

In operation 809, the processor 120 may classify paragraphs, based on the average height. The paragraph is a mass in which one or several sentences gather to represent one central idea, and may indicate a "paragraph". The processor 120 may classify paragraphs in order to normalize the line heights for each paragraph. For example, if line spacing is greater than or equal to a certain predetermined value, the processor 120 may classify the same into a new paragraph. Here, the line spacing may be defined as the difference between the center value of the previous line and the center value of the current line. The predetermined value may be a predetermined multiple of the average height. According to various embodiments, in the case of a single paragraph, the processor 120 may not perform the following operations.

In operation 811, the processor 120 may calculate the average height of lines belonging to the paragraph. Even if multiple lines belong to the same paragraph, the height (e.g., character height or font size) may be different between the lines. The processor 120 may calculate the average height of the lines by summating the heights of lines belonging to the same paragraph and dividing the same by the number of lines.

In operation 813, the processor 120 may correct (or change) the center height of each line belonging to the paragraph so as to match the average height. The processor 120 may adjust the center height of each line to the average height such that the lines belonging to the same paragraph have the same height. The size correction may be to change the line height to the average height by enlarging or reducing the center height of each line. The processor 120 may align the line heights of the strokes of handwriting classified as characters to match the average height.

According to various embodiments, if handwriting includes one line, the processor 120 may not perform the flowchart 800 in FIG. 8.

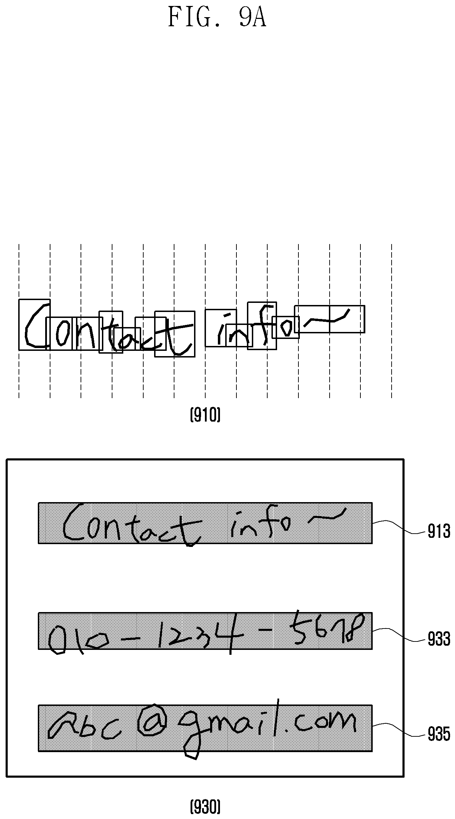

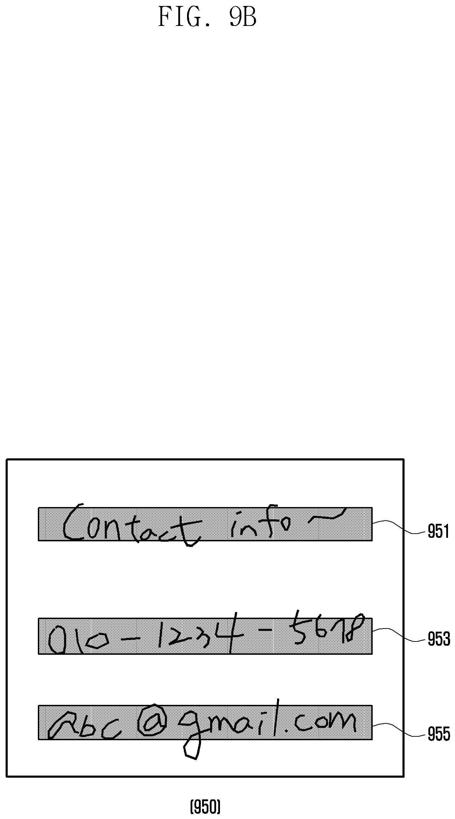

FIGS. 9A and 9B are diagrams illustrating an example of adjusting a line height in an electronic device according to various embodiments.

FIG. 9A illustrates an example of calculating a height for each partial area according to a comparative example.

Referring to FIG. 9A, a processor (e.g., the processor 120 in FIG. 1) of an electronic device (e.g., the electronic device 101 in FIG. 1) according to various embodiments may classify lines of handwriting corresponding to characters. The processor 120 may classify the handwriting indicated by reference number 930 into three lines. The processor 120 may divide characters included in each line into partial areas and determine the center height of each line, based on an average height of the partial areas. The processor 120 may divide the first line into a plurality of partial areas as indicated by reference number 910. For example, the processor 120 may configure a first partial area (e.g., including the letter C), configure a second partial area (e.g., a part of the letter C or all of the letter o) so as to include a part of a character (e.g., a part of the letter a) and partially (e.g., 1/2 of the first partial area) overlap the first partial area, and configure a third partial area (e.g., a part of the letter o or all of the letter n) so as to include a part of a character (e.g., a part of the letter o) and partially overlap a part of the second partial area. The processor 120 may determine the center height of each line, based on an average height of the partial areas.

According to the comparative example, for the handwriting indicated by reference number 930, if average heights of all partial areas included in the respective lines are calculated without excluding the center height included in some partial areas, there may be a difference in the center height between the respective lines. For example, according to the comparative example, the center height 913 of a first line may be calculated as 100 mm, the center height 933 of a second line may be calculated as 95 mm, and the center height 935 of a third line may be calculated as 110 mm.

FIG. 9B illustrates an example of calculating a height for each partial area in an electronic device according to various embodiments.

Referring to FIG. 9B, the processor 120, as indicated by reference number 950, may exclude center heights exceeding a first threshold value (e.g., 60%) or less than a second threshold value (e.g., 40%) from the heights of all the partial areas included in each line or the average height of the respective partial areas, and calculate the average height of the partial areas included in each line, based on the remaining center heights. For example, in the handwriting indicated by reference number 950, if the center height of the partial area including the letter "C" exceeds a first threshold value, or if the center height of the partial area including the letter "a" or "o" is less than a second threshold value, the processor 120 may exclude the center heights of the partial areas in calculating the average height. The processor 120 may calculate the average height of the line, based on the center heights of the remaining partial areas, excluding the center heights of some partial areas. The processor 120 may determine the center height of each line, based on the average height of the partial areas. For example, according to the comparative example, the center height 951 of a first line may be calculated as 98 mm, the center height 953 of a second line may be calculated as 98 mm, and the center height 935 of a third line may be calculated as 100 mm.

According to various embodiments, the processor 120 may classify paragraphs based on the average height, calculate the average height of lines belonging to the paragraph, and correct the center height of each line belonging to the paragraph so as to match the average height. Since there is no line to classify the same paragraph in the handwriting indicated by reference number 950, the process of normalizing the average height for each paragraph may be omitted.

FIG. 10 is a diagram illustrating an example of adjusting line spacing in an electronic device according to various embodiments.

Referring to FIG. 10, a processor (e.g., the processor 120 in FIG. 1) of an electronic device (e.g., the electronic device 101 in FIG. 1) according to various embodiments may adjust line spacing of strokes of handwriting classified as characters, based on the center height area of each line of the strokes of handwriting classified as characters, or adjust line spacing of the strokes of handwriting classified as characters, based on the center point of each line. Line spacing is the vertical spacing between two lines, which may be proportional to the font size. In the case of multiple lines in handwriting, if each line spacing is adjusted to be equal, the handwriting may look neater. Like the line height normalization method, the line spacing adjustment method may include performing line spacing adjustment for each paragraph in the case of a certain number of paragraphs. The processor 120 may adjust the spacing between two lines, based on the center height area of each line, instead of the circumscribed area thereof. For example, the processor 120 may adjust the spacing between a first line and a second line by adjusting the interval between a lower position 1011 of a center height area of the first line and an upper position 1012 of a center height of the second line. In addition, the processor 120 may adjust the spacing between the second line and a third line by adjusting the interval between a lower position 1013 of the center height area of the second line and an upper position 1014 of a center height of the third line.

According to various embodiments, if the line heights are similar to each other, the processor 120 may adjust the line spacing, based on the center position of each line. If the heights between different lines are similar to each other, the processor 120 may adjust the line spacing to be the same as or similar to the line height. If the line heights are different from each other, the processor 120 may adjust the line spacing, based on the center point of each line. In the case where three or more lines are included in handwriting, the processor 120 may fixe the center point of the uppermost line (e.g., the first line) and the lowermost line (e.g., the third line), and adjust the positions of lines (e.g., the second line) positioned therebetween to be equal. The processor 120 may adjust the line spacing by double spacing, based on the center height area of each line, without fixing the center position of a specific line (e.g., the first line or the third line).

According to various embodiments, the processor 120 may adjust line spacing for each paragraph. For example, the processor 120 may adjust the line spacing in a first paragraph and the line spacing in a second paragraph to be the same or different. The processor 120 may adjust the line spacing between the first paragraph and the second paragraph to be the same as or different from the line spacing included in each paragraph.

FIG. 11 is a flowchart 1100 illustrating a non-character alignment method in an electronic device according to various embodiments. FIG. 11 may be details of operations 315 and 317 in FIG. 3B.

Non-characters (non-text) indicate strokes that are not "letters" and may include an underline of a character (text or letter), a shape such as a circle, a sketch, or a drawing. Strokes included in non-characters may also be aligned harmoniously with characters. A non-character alignment method may include grouping all strokes classified as non-characters into several non-character groups according to a specific method and matching the grouped non-character group to a character group, thereby aligning the same. For example, the non-character alignment method may include classifying the strokes corresponding to a shape, among all the strokes classified as non-characters, into one non-character group through shape recognition, classifying the same, if various shapes are recognized, into non-character groups for respective shapes, classifying the strokes that are determined to be a large mass having a predetermined size or more, among the non-shape strokes, into a non-character groups, or classifying the masses obtained by clustering the remaining strokes into respective non-character groups, and matching each of the grouped non-character groups to a character group, thereby aligning the same.

Referring to FIG. 11, in operation 1101, a processor (e.g., the processor 120 in FIG. 1) of an electronic device (e.g., the electronic device 101 in FIG. 1) according to various embodiments may perform shape recognition. The processor 120 may perform shape recognition on strokes classified as non-characters. The shape may indicate a contour or form of a figure, and may include, for example, a shape such as a circle, a sphere, a square, or a star.

In operation 1103, the processor 120 may determine whether or not it is a shape, based on the shape recognition. The processor 120 may perform operation 1105 if handwriting corresponding to non-characters is a shape and may perform operation 1109 if handwriting corresponding to non-characters is not a shape.

If the handwriting corresponding to non-characters is not a shape, the processor 120 may cluster the non-shape strokes in operation 1109. The processor 120 may classify strokes of similar shapes or sizes into one group. For example, the processor 120 may classify strokes having a specific size or more (e.g., a size exceeding a threshold value) or strokes having a specific number of points or more (e.g., a number exceeding a threshold value) into one group, or classify strokes clustered in a specific area into one group. For example, if there are short or long strokes positioned close to a user's face (e.g., a circular shape) as if expressing hair, the processor 120 may classify a specific number of strokes or more into one group. If there are dots inside a user's face (e.g., a circular shape) as if expressing freckles, the processor 120 may classify the strokes clustered within a specific area (e.g., the user's face) into one group. The processor 120 may cluster the non-shape strokes, allocate the same to at least one non-shape group, and perform operation 1105.

In operation 1105, the processor 120 may determine a character group to be matched based on a distribution of feature points included in the character group and a determined position of a non-character (or a non-character group). Unlike the strokes classified as characters, the strokes classified as non-characters do not have a logical concept for alignment themselves, so they may be aligned harmoniously with surrounding characters. The non-character group may include a group classified as a shape and a group classified as a non-shape. A determined position of the non-character group may include a center point or a specific position of the non-character group. The processor 120 may find a character group to which the non-character group belongs in order to align the non-character group. Although a distance measurement method based on the distribution of feature points may be performed using the Euclidean distance between the center point of the non-character group and the feature point of the closest character, errors may occur when finding a character group (or a character line) belonging to the non-character group, based on the Euclidean distance.

The processor 120 may apply the feature point distribution of a character group included in a character line adjacent to the non-character group and a determined position of the non-character group to the Mahalanobis distance, thereby determining a character group to be matched. For example, the Euclidean distance may be used for matching in the case of a close distance, whereas the processor 120 may determine a character group to be matched with a non-character group in consideration of the correlation between feature points depending on the Mahalanobis distance. Since the character group (or a character line group) is written in the horizontal direction, the processor 120 may identify whether or not there is a character group that is written in the horizontal direction and has the closest distance from a determined position of the non-character (or non-character group).

In operation 1107, the processor 120 may apply an alignment parameter applied to the determined character group to the non-character group. The processor 120 may apply an alignment parameter applied to the determined character group to the non-character group in the same manner. The alignment parameter is a parameter relate to the alignment of strokes of handwriting classified as characters and may include, for example, a parameter for any one of a handwriting inclination, an indentation, a line height, or line spacing. The processor 120 may perform at least one of rotation, position movement, and size change (e.g., enlargement/reduction) on the non-character group, based on the alignment parameter. For example, the rotation parameter may correspond to the handwriting inclination, the position movement parameter may correspond to the handwriting inclination or the indentation, and the size change parameter may correspond to the line height or the line spacing.

According to various embodiments, if the classified strokes correspond to non-characters, the processor 120 may cluster and group all strokes classified as non-characters and match the grouped non-character group to a character group, thereby aligning the same. The processor 120 may match the non-character group and the character group using the Mahalanobis distance. For example, if the distance between the character group and the non-character group is less than or equal to a threshold value, the processor 120 may align the non-character group using an alignment parameter applied to the character group, and if the distance between the character group and the non-character group exceeds a threshold value, the processor 120 may not align the non-character group.

According to various embodiments, if the distance between the non-shape group and the shape group is less than or equal to a threshold value, the processor 120 may allocate the shape group and the non-shape group as one integrated group (or one non-character group) and align the integrated group (or one non-character group) by applying an alignment parameter applied to a character group matched to the integrated group. When determining a number of non-character strokes into several non-character groups, the processor 120 may classify respective shapes into a non-character group using shape recognition, classify particularly large strokes into a separate non-character group, and classify stroke masses obtained by clustering the remaining strokes into individual non-character groups. Since a non-character group produced using non-character strokes other than a shape may have a relationship with a shape, the processor 120 may merge, in the case of a non-shape group at a position similar to a shape group, two (or more) independent non-character groups into one integrated non-character group. The processor 120 may align the non-character group (e.g., a shape group, a non-shape group, and an integrated group) in which the distance between the shape group and the non-shape group is less than or equal to a threshold value (e.g., there is similarity) using an alignment parameter of a character group matched to the non-character group. The processor 120 may not perform alignment on a non-character group (e.g., a shape group, a non-shape group, and an integrated group) in which the distance between the shape group and the non-shape group exceeds a threshold value (e.g., there is no similarity).

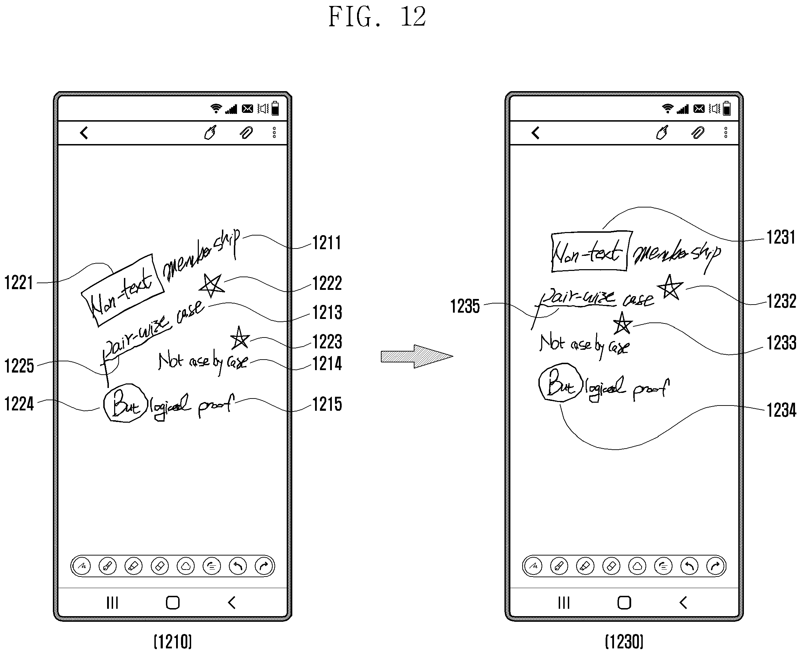

FIG. 12 is a diagram illustrating an example of aligning non-characters in an electronic device according to various embodiments.

Referring to FIG. 12, a processor (e.g., the processor 120 in FIG. 1) of an electronic device (e.g., the electronic device 101 in FIG. 1) according to various embodiments may receive a handwriting input from a user as shown in a first user interface 1210. If a request for handwriting alignment is received, the processor 120 may analyze strokes included in the handwriting and classify the same into strokes (e.g., 1211, 1213, 1214, and 1215) corresponding to characters and strokes (e.g., 1221, 1222, 1223, and 1224) corresponding to non-characters. The processor 120 may align the characters, based on a character alignment method, for the strokes of handwriting classified as characters and align the strokes classified as non-characters, based on whether or not the strokes classified as non-characters match to a character group. The processor 120 may classify character groups including the strokes of handwriting classified as characters into a first line 1211, a second line 1213, a third line 1214, and a fourth line 1215. The line may indicate a character group including one or more characters. The processor 120 may perform a handwriting inclination determination method (e.g., the flowchart 400 in FIG. 4), an indentation determination method (e.g., the flowchart 600 in FIG. 6) a line height determination method (e.g., the flowchart 800 in FIG. 8), or a line spacing adjustment method (e.g., FIG. 10) on the first line 1211 to the fourth line 1215 in sequence or in any order.

According to various embodiments, the processor 120 may perform shape recognition on the strokes corresponding to non-characters to recognize a first shape 1221, a second shape 1222, a third shape 1223, and a fourth shape 1224. The processor 120 may assign the first shape to a first group, assign the second shape 1222 to a second group, assign the third shape 1223 to a third group, and assign the fourth shape 1224 to a fourth group. According to various embodiments, the processor 120 may perform shape recognition to classify a stroke that is not a shape into a non-shape stroke 1225. Since there is one non-shape stroke 1225, the processor 120 may not perform clustering on the non-shape stroke 1225. The processor 120 may allocate the non-shape 1225 classified as a non-shape to a non-shape group.

The processor 120, based on a distribution of feature points included in the character group (character line group) and a determined position of the non-character group, may determine a character group to be matched to the non-character group. The non-character group may include a shape group and a non-shape group. The determined position of the non-character group may include a center point of the non-character group or a specific position. For example, the processor 120 may match the first shape 1221 to the first line 1211, match the second shape 122 to the second line 1213, match the non-shape 1225 to the second line 1213, match the third shape 1223 to the third line 1214, and match the fourth shape 1224 to the fourth line 1215.

According to various embodiments, the processor 120 may determine whether the distance between the non-shape stroke 1225 and the shape (e.g., the first shape 1221 to the fourth shape 1224) is less than or equal to a threshold value, thereby determining the similarity between the non-shape stroke 1225 and the shape. If the distance between the non-shape stroke 1225 and the second shape 1222 is less than or equal to a threshold value, the processor 120 may merge the non-shape stroke 1225 and the second shape 1222 into one integrated non-character group. The processor 120 may match the non-character group including the non-shape stroke 1225 and the second shape 1222 to the same character group (e.g., the second line 1213). According to various embodiments, the processor 120 may align the handwriting as shown in a second user interface 1230. The processor 120 may align the strokes of handwriting classified as characters included in the first line 1211, the second line 1213, the third line 1214, and the fourth line 1215.

The processor 120 may determine a character group to be matched to a non-character group obtained by grouping the strokes of handwriting classified as non-characters and apply an alignment parameter applied to the matched character group to the non-character group. For example, the processor 120 may apply an alignment parameter of the first line 1211 to the first shape 1231 to align the first shape 1231, apply an alignment parameter of the second line 1213 to the second shape 1232 and the non-shape stroke 1235 to align the second shape 1232, apply an alignment parameter of the third line 1214 to the third shape 1233 to align the third shape 1233, and apply an alignment parameter of the fourth line 1215 to the fourth shape 1234 to align the fourth shape 1234. The processor 120 may apply an alignment parameter applied to the character group to the non-character group (e.g., the non-shape stroke 1225 and the second shape 1222) matched to the character group (e.g., the second line 1213), thereby aligning the strokes of handwriting classified as non-characters.

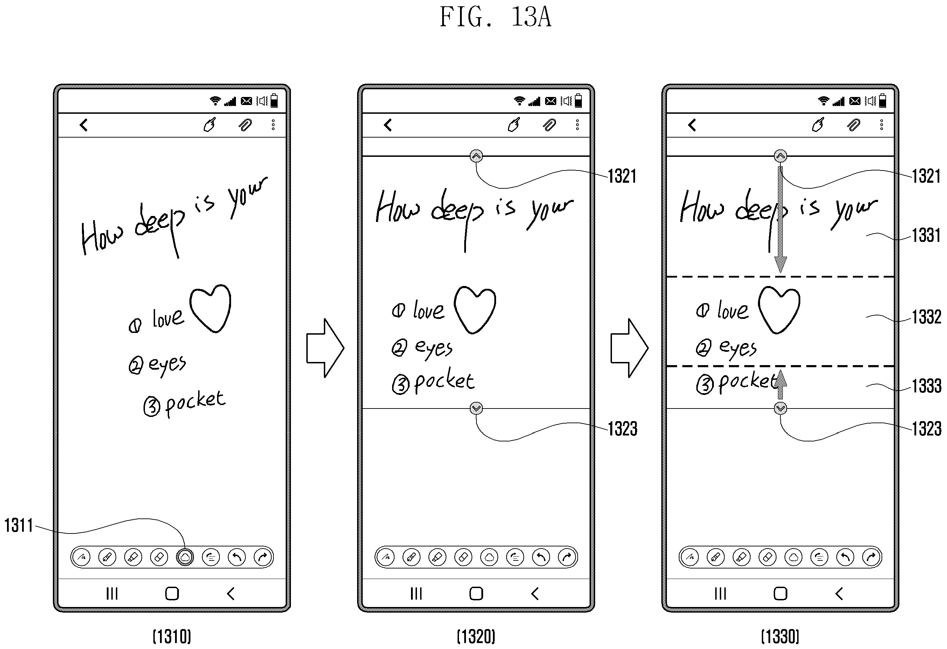

FIGS. 13A to 13C are diagrams illustrating a user interface for aligning handwriting in an electronic device according to various embodiments.

FIG. 13A illustrates a user interface for aligning handwriting in an electronic device according to various embodiments.

Referring to FIG. 13A, a processor (e.g., the processor 120 in FIG. 1) of an electronic device (e.g., the electronic device 101 in FIG. 1) according to various embodiments may receive a handwriting input from a user as shown in a first user interface 1310. If an alignment button 1311 is selected from the first user interface 1310, the processor 120 may provide a second user interface 1320. The second user interface 1320 may display the handwriting to be aligned and include indicators 1321 and 1323 for selecting handwriting alignment areas. The processor 120 may display the second user interface 1320 in a preview form or in a form to which handwriting alignment is applied. When displaying the second user interface in a preview form, if the user selects cancel or go back, the screen may return to the first user interface 1310 before alignment.

A first indicator 1321 may be disposed in the upper portion on a display module (e.g., the display module 160 in FIG. 1) of the electronic device 101, and a second indicator 1323 may be disposed in the lower portion on the display module 160. The user may select the handwriting alignment area by moving the first indicator 1321 or the second indicator 1323 in a vertical direction (e.g., up or down). For example, the processor 120, based on a user input, may move the first indicator 1321 down and move the second indicator 1323 up so as to provide a third user interface 1330 for configuring the handwriting alignment area. The third user interface 1330 may provide a first area 1331, a second area 1332, and a third area 1333 obtained by dividing the handwriting alignment area. For example, the processor 120 may align only the handwriting in the second area 1332 positioned between the first indicator 1321 and the second indicator 1323, and may not align the handwriting in the first area 1331 and the third area 1323.

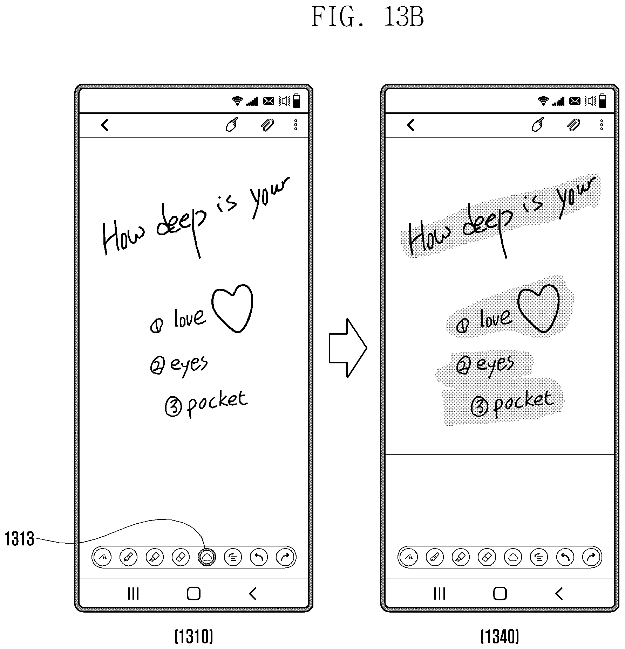

FIG. 13B illustrates another user interface for aligning handwriting in an electronic device according to various embodiments.

Referring to FIG. 13B, if the alignment button 1311 is selected from the first user interface 1310, the processor 120 may provide a fourth user interface 1340. The fourth user interface 1340 may be an example in which the user directly select areas desired to be aligned. The user may directly select desired alignment areas by a pen or hand. The processor 120 may configure the area (e.g., display shade) touched by the user through rubbing for selecting a large area such as the fourth user interface 1340, instead of a small area such as a point or a line, as the handwriting alignment area. The processor 120 may perform alignment when the user input is released (e.g., when the user input is released after rubbing with a hand or pen), when a predetermined time elapses after the user input is released, or when a completion button (or the alignment button) is selected.

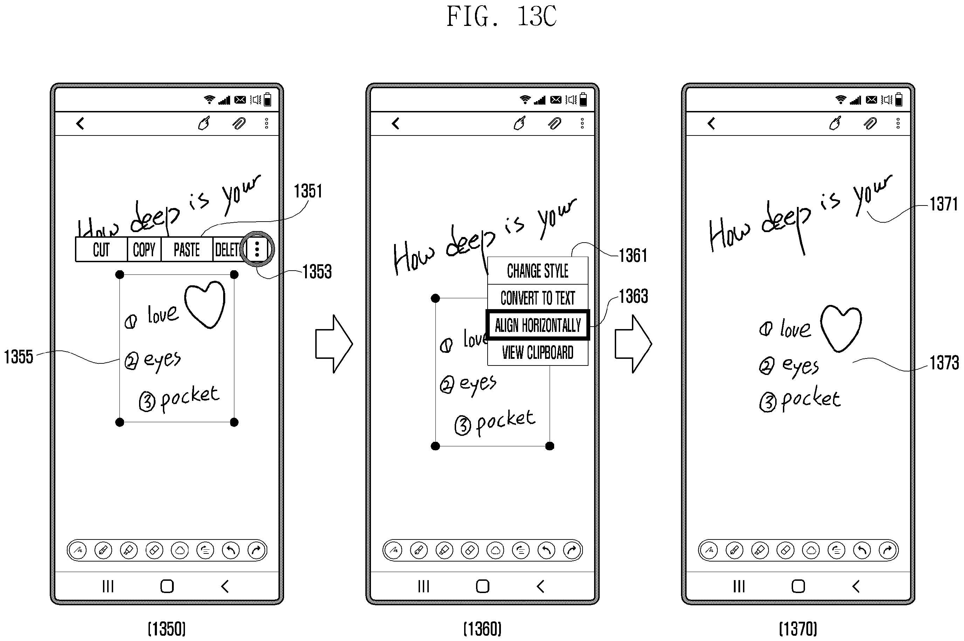

FIG. 13C illustrates another user interface for aligning handwriting in an electronic device according to various embodiments.

Referring to FIG. 13C, if the alignment button 1311 is selected from the first user interface 1310, the processor 120 may provide a fifth user interface 1350. The fifth user interface 1350 may be an example in which the user may directly select areas desired to be aligned, such as selection of areas with a mouse. The user may directly select a desired alignment area using an area selection function of moving diagonally from the first position (e.g., the left corner of the rectangle) to the second position (e.g., the right corner of the rectangle). The processor 120 may configure the rectangular area 1355 as a handwriting alignment area. If the handwriting alignment area is selected, the processor 120 may display a function list 1351. The function list 1351 may include various functions (e.g., cut, copy, paste, and delete) capable of editing the selected area. The function list 1351 may be displayed as a pop-up window, and may be displayed to be superimposed on the handwriting.

According to various embodiments, if an add button 1353 is selected from the fifth user interface 1350, the processor 120 may provide a sixth user interface 1360. The sixth user interface 1360 may include an additional function list 1361 for the selected area. The additional function list 1361 may include other functions (e.g., change style, convert to text, align horizontally, and view clipboard) that are not displayed in the function list 1351.

According to various embodiments, if the align horizontally 1363 is selected from the additional function list 1361, the processor 120 may provide a seventh user interface 1370. The seventh user interface 1370 may be an example of displaying an aligned screen. The seventh user interface 1370 may include an area 1371 in which the handwriting is not aligned and an area 1373 in which the handwriting is aligned. The processor 120 may perform inclination alignment (e.g., handwriting inclination) on the handwriting (e.g., ①. love, 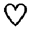 , ② Eyes, and ③ pocket) included in the rectangular area 1355 and may not perform alignment on the handwriting (e.g., How deep is your) that is not included in the rectangular area 1355.

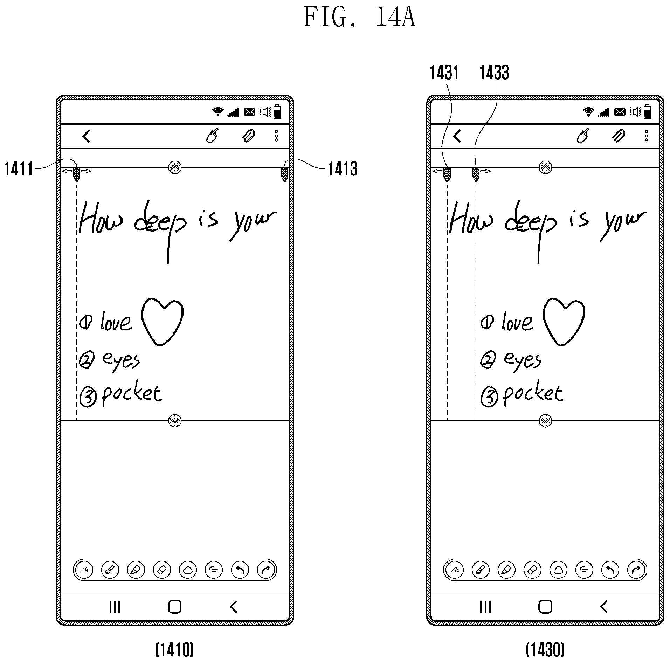

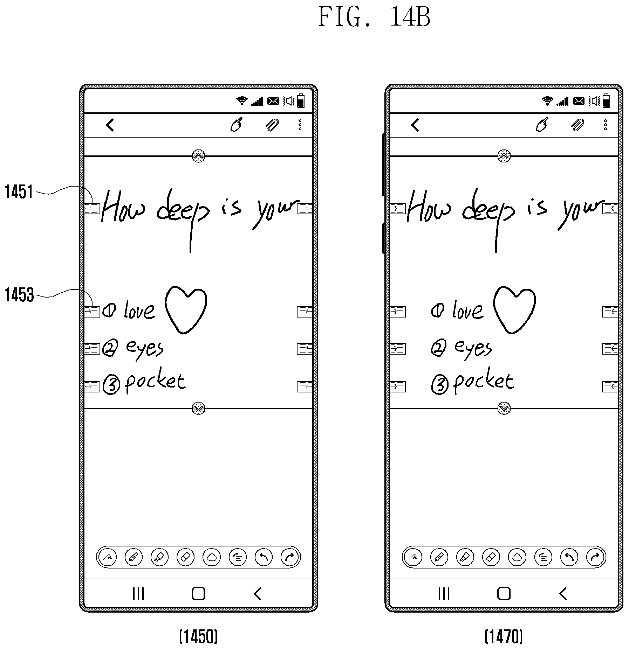

FIGS. 14A and 14B are diagrams illustrating a user interface for configuring an indentation in an electronic device according to various embodiments.

FIG. 14A is a diagram illustrating a user interface for configuring an indentation in an electronic device according to various embodiments.

Referring to FIG. 14A, a processor (e.g., the processor 120 in FIG. 1) of an electronic device (e.g., the electronic device 101 in FIG. 1) according to various embodiments may display a first user interface 1410 including indentation indicators 1411 and 1413. The first user interface 1410 may include indentation indicators 1411 and 1413 for a user to manually adjust an indentation position. The user may directly adjust the indentation position by adjusting the positions of the first indentation indicator 1411 and the second indentation indicator 1413 in the horizontal direction (e.g., left and right). The processor 120 may adjust the first indentation indicator 1411 and the second indentation indicator 1413 to perform left alignment or right alignment on the strokes of handwriting classified as characters.

The processor 120 may classify the handwriting into lines or paragraphs and display a second user interface 1420 including indentation indicators 1431 and 1433. The second user interface 1420 may include at least two indentation indicators 1431 and 1433 in order to apply different indentations to the respective lines or paragraphs. The processor 120, based on a user input, may adjust the indentation position of the first line (e.g., How deep is your) by adjusting the first indentation indicator 1431 and adjust the indentation positions of the second line to the third line (e.g., ①. love, 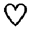 , ② Eyes, and ③ pocket) by adjusting the second indentation indicator 1433. For example, the processor 120 may classify the first into fourth lines, classify the first line into a first paragraph, and classify the second to fourth lines into a second paragraph. The processor 120 may provide a first indentation indicator 1431 corresponding to the first paragraph and a second indentation indicator 1433 corresponding to the second paragraph. The user may adjust the first indentation indicator 1431 and the second indentation indicator 1433 to apply the same or different indentations to the first paragraph and the second paragraph.

FIG. 14B is a diagram illustrating another user interface for configuring an indentation in an electronic device according to various embodiments.

Referring to FIG. 14B, the processor 120 may display a third user interface 1450 including indentation indicators 1451 and 1453. For example, the processor 120 may classify first to fourth lines and display a third user interface 1450 including indentation indicators respectively positioned at the left end and right end of each line. For example, the third user interface 1450 may include a first indentation indicator 1451 at the left end of the first line and a second indentation indicator 1453 at the left end of the second line.

The processor 120 may provide a fourth user interface 1470 if the indentation indicators displayed at the left ends of the second to fourth lines are selected based on a user input. The fourth user interface 1470 may be an example in which indentation is applied to the second to fourth lines. For example, when the indentation indicator is selected once, the processor 120 may move strokes of handwriting classified as characters on the line horizontally (e.g., left and right) as much as a configured area.

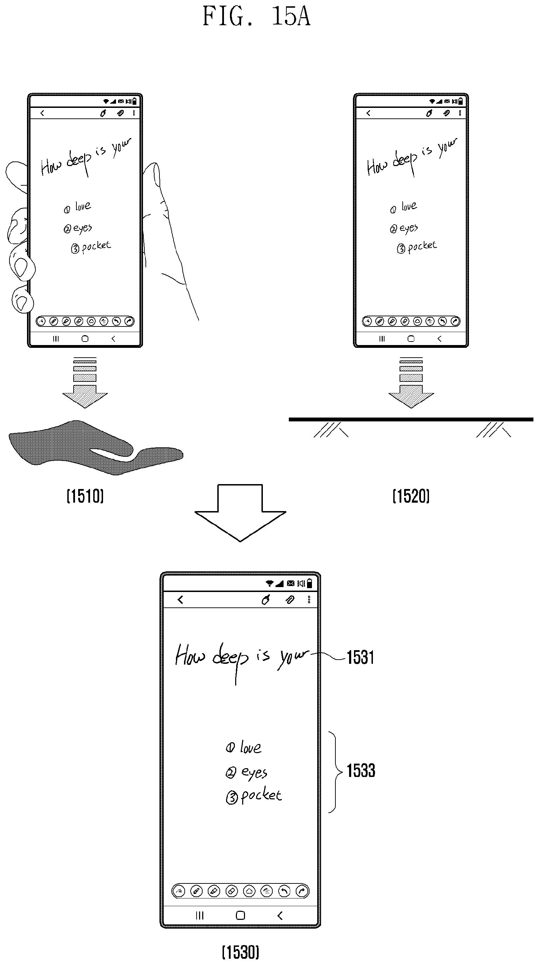

FIGS. 15A to 15C are diagrams illustrating a user interface for aligning handwriting according to a user gesture in an electronic device according to various embodiments.

FIG. 15A is a diagram illustrating a user interface for aligning handwriting according to a user gesture in an electronic device according to various embodiments.

Referring to FIG. 15A, an electronic device (e.g., the electronic device 101 in FIG. 1) according to various embodiments may be configured such that the length of two parallel sides of the electronic device housing is greater or less than the length of the remaining two parallel sides. In the state in which the user views a display (e.g., the display module 160 in FIG. 1) of the electronic device 101 from the front, if the short length of the two parallel sides of the electronic device housing faces up, the electronic device 101 may be positioned in the vertical direction (or the portrait direction), and if the long length of the two parallel sides of the electronic device housing faces up, the electronic device 101 may be positioned in the horizontal direction (or the landscape direction).

A processor (e.g., the processor 120 in FIG. 1) may receive a handwriting input and detect a user gesture of applying an impact to the lower side of the electronic device 101 while the electronic device 101 is in the vertical direction. The user gesture may be similar to a gesture of aligning paper by tapping the paper on the desk when aligning several sheets of paper. For example, as shown in a first situation 1510, the user may hit the lower side of the electronic device 101 with a hand while holding the electronic device 101 in the vertical direction. As shown in a second situation 1520, the user may tap on a flat surface (e.g., a desk) with the lower side of the electronic device 101 while the electronic device 101 is in the vertical direction. If a user gesture such as the first situation 1510 or the second situation 1520 is detected, the processor 120 may provide a first user interface 1530 in which handwriting is aligned in the vertical direction. The first user interface 1530 may be obtained by correcting an inclination of handwriting included in the first line 1531 and correcting an inclination or line spacing of handwriting included in the second to fourth lines.

According to various embodiments, the processor 120 may align the handwriting, based on the number of times a user gesture is detected. For example, the processor 120 may align, if the user gesture is detected once, the inclination of handwriting, align, if the user gesture is detected twice, the inclination and indentation of handwriting, align, if the user gesture is detected three times, the inclination, indentation, and line spacing of handwriting, and align, if the user gesture is detected four times, the inclination, indentation, line spacing, and line height of handwriting. This is only an example to help understanding, and the disclosure is not limited to the description.

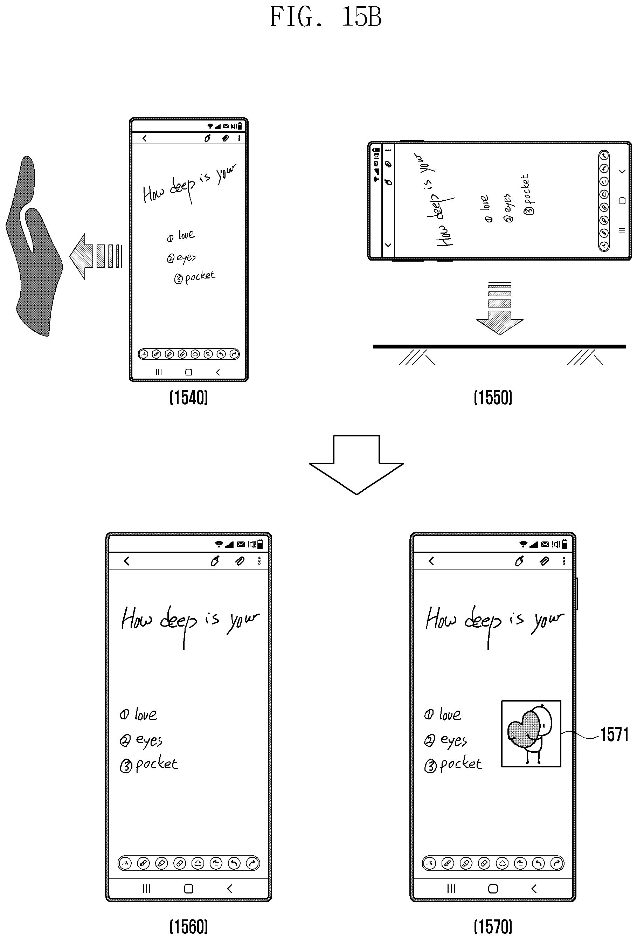

FIG. 15B is a diagram illustrating another user interface for aligning handwriting according to a user gesture in an electronic device according to various embodiments.

Referring to FIG. 15B, the processor 120 may receive a handwriting input and detect a user gesture of applying an impact to the left side of the electronic device 101 while the electronic device 101 is in the vertical direction or while the electronic device 101 is in the horizontal direction. For example, as shown in a third situation 1540, the user may hit the left side of the electronic device 101 with a hand while holding the electronic device 101 in the vertical direction. As shown in a fourth situation 1550, the user may tap on a flat surface (e.g., a desk) with the left side of the electronic device 101 while the electronic device 101 is in the horizontal direction. If a user gesture such as the third situation 1540 or the fourth situation 1550 is detected, the processor 120 may provide a second user interface 1560 in which handwriting is aligned in the horizontal direction. The second user interface 1560 may be obtained by correcting the inclination of handwriting and aligning the indentation of handwriting to the left. When aligned like the second user interface 1560, an empty space may be produced on the right side. The user may further input additional handwriting (e.g., a picture 1571) in the empty space in the aligned state as in the second user interface 1560. The third user interface 1570 may be an example in which a picture 1571 is further included in the second user interface 1560.

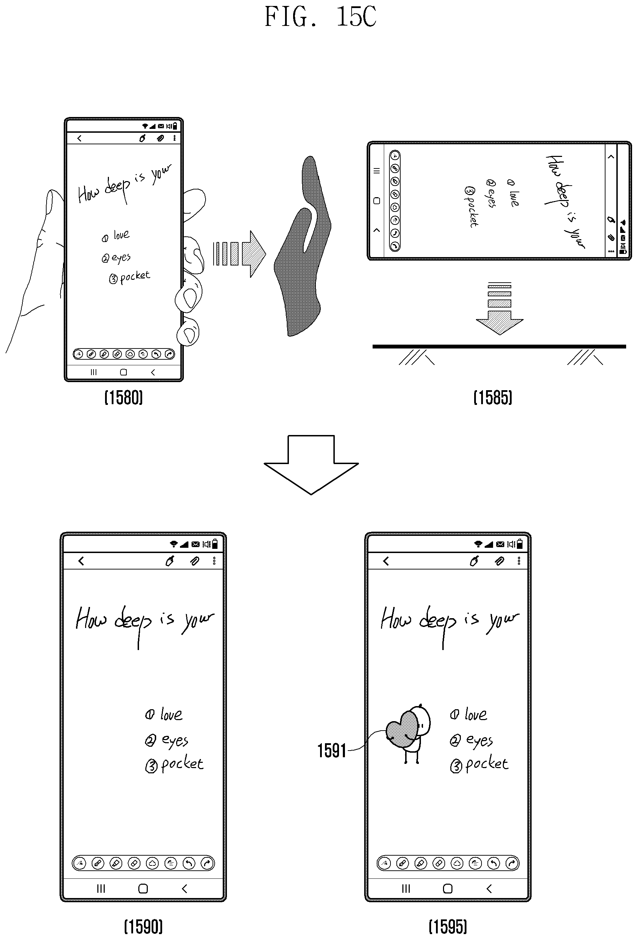

FIG. 15C is a diagram illustrating another user interface for aligning handwriting according to a user gesture in an electronic device according to various embodiments.

Referring to FIG. 15C, the processor 120 may receive a handwriting input and detect a user gesture of applying an impact to the right side of the electronic device 101 while the electronic device 101 is in the vertical direction or while the electronic device 101 is in the horizontal direction. For example, as shown in a fifth situation 1580, the user may hit the right side of the electronic device 101 with a hand while holding the electronic device 101 in the vertical direction. As shown in a sixth situation 1585, the user may tap on a flat surface (e.g., a desk) with the right side of the electronic device 101 while the electronic device 101 is in the horizontal direction. If a user gesture such as the fifth situation 1580 or the sixth situation 1585 is detected, the processor 120 may provide a fourth user interface 1590 in which the inclination of handwriting is aligned in the horizontal direction. The fourth user interface 1590 may be obtained by correcting the inclination of handwriting and aligning the indentation of handwriting to the right. When aligned like the fourth user interface 1590, an empty space may be produced on the left side. The user may further input additional handwriting (e.g., a picture 1591) in the empty space in the aligned state as in the fourth user interface 1590. The fifth user interface 1595 may be an example in which a picture 1591 is further included in the fourth user interface 1590.

An operation method of an electronic device (e.g., the electronic device 101 in FIG. 1) according to various embodiments of the disclosure may include classifying handwriting into strokes corresponding to characters and non-character strokes that do not correspond to characters, aligning the strokes of handwriting classified as characters, based on a character alignment method, matching the non-character strokes to an associated character group, and aligning the strokes of handwriting classified as non-characters, based on an alignment parameter applied to the matched character group.

The aligning of the strokes of handwriting classified as characters may include determining a handwriting inclination, based on feature points of the strokes of handwriting classified as characters, determining an indentation, based on a reference position of each line, determining a height of each line, based on a center height of the line, and adjusting line spacing, based on the height of each line, thereby aligning the strokes of handwriting classified as characters.

The determining of a handwriting inclination may include dividing the strokes of handwriting classified as characters into partial areas, obtaining feature points for each partial area, excluding some feature points, based on feature points of neighboring partial areas, and determining a handwriting inclination, based on the remaining feature points, thereby aligning inclinations of the strokes of handwriting classified as characters.

The determining of an indentation may include classifying the handwriting classified as characters into lines, identifying a start position of each line, clustering the identified start positions, and determining an indentation of the clustered line, thereby aligning indentation positions of the strokes of handwriting classified as characters.

The determining of a height of each line may include classifying the handwriting classified as characters into lines, dividing characters included in each line into partial areas, determining a center height of each line, based on an average height of the partial areas, and aligning line heights of the strokes of handwriting classified as characters, based on the center height.

The determining of a height of each line may include calculating an average height of all the lines, based on the center height of each line, classifying paragraphs, based on the average height, calculating an average height of the lines belonging to the paragraph, and aligning the line heights of the strokes of handwriting classified as characters such that the center height of each line belonging to the paragraph matches to the average height.

The aligning of the strokes of handwriting classified as non-characters may include assigning strokes recognized as shapes through shape recognition, among the strokes classified as non-characters, to a shape group, clustering strokes classified as non-shapes and assigning the same to a non-shape group, thereby producing a non-character group, determining a character group to be matched, based on a distributions of feature points included in the character group and a determined position of the non-character group, and applying an alignment parameter applied to the determined character group to the non-character group.

Various embodiments of the disclosure disclosed in this specification and drawings are merely provided by way of example to easily explain the technical content of the disclosure and help the understanding of the disclosure, and are not intended to limit the scope of the disclosure. Therefore, the scope of the disclosure should be interpreted to encompass all changes or modifications derived from the technical idea of the disclosure, as well as the embodiments disclosed herein.

## Claims

1. An electronic device comprising:
a display module;
a memory; and
a processor operatively connected to the display module and the memory,
wherein the processor is configured to:
classify handwriting into strokes corresponding to characters and non-character strokes that do not correspond to characters;
align the strokes of handwriting classified as characters based on a character alignment method;
match the non-character strokes to an associated character group; and
align the strokes of handwriting classified as non-characters based on an alignment parameter applied to the matched character group.

2. The electronic device of claim 1, wherein the processor is configured to determine a handwriting inclination based on feature points of the strokes of handwriting classified as characters, determine an indentation, based on a reference position of each line, determine a height of each line based on a center height of the line, and adjust line spacing based on the height of each line, thereby aligning the strokes of handwriting classified as characters.

3. The electronic device of claim 1, wherein the processor is configured to divide the strokes of handwriting classified as characters into partial areas, obtain feature points for each partial area, exclude some feature points based on feature points of neighboring partial areas, and determine a handwriting inclination based on the remaining feature points, thereby aligning inclinations of the strokes of handwriting classified as characters.

4. The electronic device of claim 1, wherein the processor is configured to classify the handwriting classified as characters into lines, identify a start position of each line, cluster the start positions, and determine an indentation of the clustered line, thereby aligning indentation positions of the strokes of handwriting classified as characters.

5. The electronic device of claim 4, wherein the processor is configured to determine, in case that the identified start positions have a first position and a second position, at least one of the first position, the second position, or an average of the first position and the second position as the indentation position.

6. The electronic device of claim 1, wherein the processor is configured to classify the handwriting classified as characters into lines, divide characters included in each line into partial areas, determine a center height of each line based on an average height of the partial areas, and align line heights of the strokes of handwriting classified as characters based on the center height.

7. The electronic device of claim 6, wherein the processor is configured to exclude center heights that exceed a first threshold value or are less than a second threshold value from heights of all the partial areas included in each line or the average height of the partial areas, and calculate the average height of the partial areas included in each line based on the remaining center heights.

8. The electronic device of claim 6, wherein the processor is configured to calculate an average height of all the lines based on the center height of each line, classify paragraphs, based on the average height, calculate an average height of the lines belonging to the paragraph, and align the line heights of the strokes of handwriting classified as characters such that the center height of each line belonging to the paragraph matches to the average height.

9. The electronic device of claim 1, wherein the processor is configured to adjust the line spacing of the strokes of handwriting classified as characters based on a center height area of each line included in the strokes of handwriting classified as characters, or adjust the line spacing of the strokes of handwriting classified as characters based on a center point of each line.

10. The electronic device of claim 1, wherein the processor is configured to cluster the non-character strokes into a group, match the grouped non-character strokes to a character group, and align the strokes of handwriting classified as non-characters based on an alignment parameter of the matched character group.

11. The electronic device of claim 10, wherein the processor is configured to assign non-character strokes recognized as shapes through shape recognition, among the non-character strokes, to a shape group, cluster non-character strokes classified as non-shapes and assign the same to a non-shape group, thereby producing a non-character group, determine a character group to be matched based on a distributions of feature points included in the character group and a determined position of the non-character group, and apply an alignment parameter applied to the determined character group to the non-character group.

12. The electronic device of claim 10, wherein the processor is configured to merge, in case that a distance between the non-shape group and the shape group is less than or equal to a threshold value, the shape group and the non-shape group into one integrated group, and align the integrated group by applying an alignment parameter applied to the character group matched to the integrated group.

13. The electronic device of claim 11, wherein the processor is configured to not align the non-character group in case that a distance between the character group and the non-character group exceeds a threshold value or in case that a distance between the shape group and the non-shape group exceeds a threshold value.

14. An operation method of an electronic device, the method comprising:
classifying handwriting into strokes corresponding to characters and non-character strokes that do not correspond to characters;
aligning the strokes of handwriting classified as characters based on a character alignment method; and
matching the non-character strokes to an associated character group and aligning the strokes of handwriting classified as non-characters based on an alignment parameter applied to the matched character group.

15. The method of claim 14, wherein the aligning of the strokes of handwriting classified as characters comprises:
determining a handwriting inclination, based on feature points of the strokes of handwriting classified as characters;
determining an indentation of the strokes of handwriting classified as characters, based on a reference position of each line;
determining a height of each line of the strokes of handwriting classified as characters, based on a center height of the line; and
adjusting line spacing, based on the height of each line, thereby aligning the strokes of handwriting classified as characters.
